# NEUE EUROPÄISCHE PATENTSCHRIFT

(11) **EP 0 971 814 B2**
(45) Veröffentlichungstag und Bekanntmachung des Hinweises auf die Entscheidung über den Einspruch: **12.09.2007**
(45) Hinweis auf die Patenterteilung: 09.04.2003
(21) Anmeldenummer: 99904695.6
(22) Anmeldetag: 05.01.1999
(51) Int. Cl.: B29C 70/84, B29C 65/70, B29C 65/58

(54) **VERFAHREN ZUR HERSTELLUNG EINER VERBINDUNG EINES DICHTUNGSBAUTEILS MIT EINEM BAUELEMENT**
METHOD FOR PRODUCING A CONNECTION BETWEEN A SEAL COMPONENT AND A STRUCTURAL COMPONENT
PROCEDE POUR REALISER UN ASSEMBLAGE ENTRE UN ELEMENT D'ETANCHEITE ET UN ELEMENT DE CONSTRUCTION

(30) Priorität: 07.01.1998 DE 19800282
(43) Veröffentlichungstag der Anmeldung: 19.01.2000
(73) Patentinhaber: Henniges Automotive GmbH & Co. KG, 31547 Rehburg-Loccum (DE)
(72) Erfinder: KREYE, Bernhard, D-31315 Wunstorf (DE)
(74) Vertreter: Jabbusch, Matthias
(86) Internationale Anmeldenummer: PCT/DE1999/000009
(87) Internationale Veröffentlichungsnummer: WO 1999/034966

(56) Entgegenhaltungen:
- EP-A- 0 014 247
- EP-A- 0 158 046
- EP-A- 0 368 817
- EP-A- 0 614 775
- EP-A- 0 633 128
- EP-A- 0 707 993
- EP-A- 0 845 347
- EP-A- 0 863 035
- DE-A- 1 604 736
- DE-A- 3 341 926
- DE-A- 3 742 719
- DE-A- 4 108 219
- DE-A- 4 326 013
- FR-A- 2 157 189
- FR-A- 2 627 555
- FR-A- 2 649 145
- GB-A- 2 245 300
- US-A- 5 073 324

## Beschreibung

Die Erfindung betrifft ein Verfahren zur Herstellung einer Verbindung eines wenigstens ein Halteorgan aufweisenden Dichtungs-Bauteils mit einem Bauelement nach dem Oberbegriff des Patentanspruchs.

Übliche Verfahren zur Verbindung von Teilen umfassen zum einen die Gruppe der lösbaren Verbindungen und zum anderen die Gruppe der unlösbaren Verbindungen. Dabei ist eigentlich auch eine unlösbare Verbindung von Teilen zwar grundsätzlich wenn auch mit erheblichen Aufwand lösbar, das führt jedoch, zum Beispiel bei einer Schweißverbindung oder Nietverbindung, zur völligen Zerstörung der Verbindungselemente und zumeist auch zu einer mechanischen Beschädigung der Verbindungsbereiche der verbunden gewesenen Teile.

Das Dokument FR-A-2 157 189 zeigt ein Verfahren zur Herstellung einer Verbindung eines Dichtungs-Bauteils mit einem Bauelement, wobei auf einer im Verbindungsbereich befindlichen Fläche des Bauelements mittels anhaftender und aushärtender Vergußmasse wenigstens ein Zwischenhalter ausgebildet wird, der mit mindestens einem Halteorgan des Bauteils in haltende Wirkverbindung bringbar ist. In der DE 195 04 828 A1 ist das Ausbilden eines Zwischenhalters durch einen Spritzvorgang unter Zuhilfenahme einer geschlossenen Spritzform beschrieben.

Lösbare Verbindungen, zumeist Schraubverbindungen, Klemmverbindungen oder dergleichen, sind dagegen sowohl in der Herstellung und Montage als auch insbesondere bei der Demontage, wenn es gilt, die Verbindungsmittel zu lösen, arbeitsaufwendig und damit kostenintensiv.

Der Erfindung liegt die Aufgabe zugrunde, eine Verbindung kostengünstig herzustellen, die mit geringem Arbeitsaufwand wieder lösbar ist.

Diese Aufgabe ist durch das Verfahren von Anspruch 1 gelöst.

Es ist eine Besonderheit des hier angegebenen Verfahrens, daß das Bauteil mit dem Bauelement nicht direkt verbunden wird, sondern vielmehr indirekt über den Zwischenhalter, wobei der Zwischenhalter in erfindungswesentlicher Weise an Ort und Stelle, das heißt im Verbindungsbereich, durch Gießen, oder Extrudieren der flüssigen aushärtenden Vergußmasse ausgebildet wird.

Dabei kann so vorgegangen werden, daß das Bauteil an das Bauelement in der vorbestimmten Position gesetzt wird und daß es dann anschließend, bei der Ausbildung des Zwischenhalters aus Vergußmasse, an einer Formgebung der Vergußmasse zum Zwischenhalter beteiligt wird.

Der aus Vergußmasse an Ort und Stelle, nämlich im Verbindungsbereich ausgebildete Zwischenhalter, ist mit dem Bauelement aufgrund seiner Anhaftung verbunden. Mit dem Bauteil kann der ausgehärtete Zwischenhalter dann in eine haltende Wirkverbindung gebracht werden, so daß letztlich das Bauteil mit dem Bauelement leicht und einfach verbindbar ist.

Der Zwischenhalter kann aus einer Vergußmasse gegossen werden. Die Vergußmasse ist während des Gießens flüssig ausgebildet.

Nach der Erfindung ist alternativ vorgesehen, daß der Zwischenhalter aus einer Vergußmasse extrudiert wird. Durch Extrudieren einer z. B. pastösen Vergußmasse, einer Extrusionsmasse, läßt sich ein Zwischenhalter ausbilden und an das Bauelement ansetzen. Beim Extrudieren des Zwischenhalters sind zudem vorteilhaft keine zusätzlichen Formteile erforderlich, um eine Form für die Ausformung des Zwischenhalters zu bilden.

Nach der Erfindung bilden vielmehr das Bauteil und das Bauelement einen Aufnahmeraum für die extrudierte Vergußmasse während des Ausbildens des Zwischenhalters aus. Vorzugsweise wird dieser Aufnahmeraum durch das Bauteil und das Bauelement vollständig ausgebildet. Das Bauteil ist beispielsweise an das Bauelement in der vorbestimmten Position ansetzbar, wodurch zugleich ein derartiger Aufnahmeraum ausgebildet wird. Der Aufnahmeraum ist beispielsweise als Hohlkammer, als Rille, als Vertiefung oder dergleichen ausgebildet, in welche die extrudierte Vergußmasse zum Ausbilden des Zwischenhalters aufgetragen bzw. eingelassen wird. Das Auftragen bzw. Einlassen der extrudierten Vergußmasse erfolgt mittels einer Extrudierdüse, die beispielsweise als Breitschlitzdüse ausgebildet ist. Diese Breitschlitzdüse kann so bemessen sein, daß sie den gesamten durch Bauteil und Bauelement ausgebildeten Aufnahmeraum überstreicht und somit durch ein einmaliges Bewegen über diesen Aufnahmeraum hinweg unter gleichzeitigem Aufbringen der Vergußmasse den Aufnahmeraum z. B. vollständig mit der extrudierten Vergußmasse füllt. Die extrudierte Vergußmasse härtet anschließend zu dem Zwischenhalter aus, der dann Bauteil und Bauelement miteinander verbindet. Das Bauteil und das Bauelement können auch für eine zu gießende, flüssige Vergußmasse einen derartigen Aufnahmeraum ausbilden. Dabei können diese Bauelemente so gelagert sein, daß der gebildete Aufnahmeraum so angeordnet ist, daß die eingegossene Vergußmasse nicht aus dem Aufnahmeraum herausläuft.

Bauteil und Bauelement könnten aus unterschiedlichsten Materialien, wie zum Beispiel Metall, Glas, Holz, Kunststoff oder Elastomer bestehen. Das erfindungsgemäße Verfahren hat somit auch den Vorteil, unterschiedlichste Werkstoffe miteinander problemlos verbinden zu können.

Als Vergußmasse ist zum Beispiel ein Zweikomponenten-Polyurethan verwendbar, so daß der daraus geformte Zwischenhalter chemisch aushärtet. Als Vergußmasse ist auch ein feuchtigkeitsreagierendes Einkomponenten-Polyurethan verwendbar. Es sind jedoch auch andere aushärtende Materialien einsetzbar, zum Beispiel auch solche, die durch thermische Behandlung aushärten.

Eine haltende Wirkverbindung zwischen dem Bauteil und dem aus der Vergußmasse gebildeten Zwischenhalter wird erfindungsgemäß dadurch erreicht, daß ein oder mehrere Halteorgane des Bauteils eine Ausgestaltung erhalten, die ihre Verklammerung, Verrastung oder dergleichen mit dem Zwischenhalter ermöglichen. Es könnten zum Beispiel als Halteorgan nutzbare Hohlräume im Bauteil beim Auftragen der Vergußmasse durch Gießen oder Extrusion gefüllt werden, so daß sich der Zwischenhalter nach seinem Aushärten mit dem Bauteil verklammert hat. Ebenso lassen sich am Bauteil befindliche Vorsprünge, Leisten, Nasen, Rippen und dergleichen mit Vergußmassen umgießen, so daß derartige Halteorgane im ausgehärteten Zwischenhalter aufgenommen und somit ebenfalls verklammert sind. Da der fertige, seine Funktion entfaltende Zwischenhalter mit dem Bauelement verklebt ist, sind schließlich Bauteil und Bauelement über den extrudierten oder gegossenen Zwischenhalter fest miteinander verbunden. Zwischen Bauteil und Zwischenhalter besteht dabei eine mechanische Verbindung, die sich ggf., bei entsprechender Geometrie der Halteorgane, auch relativ leicht wieder lösen läßt, nämlich dann, wenn sich entweder Angußzapfen des Zwischenhalters aus Hohlräumen im Bauteil leicht herausziehen lassen oder umgossene Vorsprünge, Füße, Rippen und dergleichen Halteorgane des Bauteils aus dem Zwischenhalter gezogen werden.

Die an der Aufnahme der Vergußmasse zum Zwischenhalter beteiligten Flächen des Bauteils können bei auftretender Adhäsionsneigung der für Bauteil und Vergußmasse verwendeten Werkstoffe vor Anlage der Vergußmasse mit einem Trennmittel beschichtet werden. Dadurch wird ein späteres Lösen der Verbindung erleichtert, das heißt Bauteil und Bauelement sind wieder voneinander ohne besonderen Aufwand trennbar.

Das erfindungsgemäße Verfahren ermöglicht mit besonderem Vorteil die alternativen Ausgestaltungen für haltende Wirkverbindungen, daß entweder nach dem Extrudieren bzw. Gießen der Vergußmasse die Verbindung zwischen Bauteil und Bauelement fertiggestellt ist, oder daß am Zwischenhalter entsprechende Ausgestaltungen gebildet werden, die ein leichtes Zusammenfügen von Bauteil und Bauelement ermöglichen, indem der ausgehärtete Zwischenhalter, der am Bauelement fest verklebt sitzt, mit den Halteorganen am Bauteil in haltende Wirkverbindung gebracht wird. Beispielsweise können Rastleisten als Halteorgane in entsprechende formgebungsmäßig dazu passende Hinterschneidungen oder dergleichen Aufnahmen des Zwischenhalters eingerastet werden.

Für die Vergußmasse ist ein nach der Aushärtung hinsichtlich ihrer Härte und Elastizität zu den entsprechenden Eigenschaften des jeweiligen Bauteils konträrer Werkstoff besonders vorteilhaft. Besteht das Bauteil zum Beispiel aus einem harten Material, wie Metall oder dergleichen, ist es vorteilhaft, für die Vergußmasse ein auch nach der Aushärtung noch elastisch bleibendes Material zu wählen. Die Bauteile, bzw. deren Halteorgane, können dann aus dem aus der Vergußmasse ausgehärteten Zwischenhalter gezogen werden, da sich das elastische Material der Vergußmasse verformen kann. Andererseits ist es dann vorteilhaft, eine härtere Vergußmasse einzusetzen, wenn das Bauteil aus einem weichen Material, zum Beispiel einem Elastomer besteht. Bei einer Trennung zwischen Bauteil und Bauelement verformt sich dann das Halteorgan des gegenüber dem Zwischenhalter weicheren Bauteils.

Das Bauteil und sein Halteorgan werden vorzugsweise gemeinsam in wenigstens einem Arbeitsgang gefertigt und danach über den Zwischenhalter mit dem Bauelement verbunden. Als Material für das Bauteil wird dabei vorzugsweise Moosgummi verwendet. Moosgummi hat elastische Eigenschaften, die bei bestimmten Anwendungsfällen der erfindungsgemäßen Verbindung vorteilhaft sind. So ist Moosgummi z. B. für Anwendungen von Bauteilen im dichtungstechnischen Bereich geeignet, in denen beispielsweise als relativ weiches Elastomerteil als Dichtlippe eingesetzt wird, da aufgrund der hervorragenden Elastizität Reibungsgeräusche, insbesondere Quietschgeräusche, vermieden werden. Als Material für das Halteorgan wird dabei ein härterer Werkstoff als Moosgummi verwendet, beispielsweise EPDM.

Ausführungsbeispiele des erfindungsgemäßen Verfahrens, insbesondere verschiedene Anwendungsmöglichkeiten der erfindungsgemäßen Verbindungstechnik, sind in der Zeichnung dargestellt. Es zeigen:
- Fig. 1: eine schematische Seitenansicht einer Ausführungsmöglichkeit eines Verbindungsbereichs zwischen einem Bauteil und einem Bauelement im Schnitt,
- Fig. 2: eine schematische Seitenansicht einer anderen Ausführungsmöglichkeit eines Verbindungsbereichs zwischen einem Bauteil und einem Bauelement im Schnitt,
- Fig. 3: eine Ansicht des Verbindungsbereiches gemäß Fig. 1,
- Fig. 4: eine weitere Ansicht des Verbindungsbereiches gemäß Fig. 1,
- Fig. 5: eine schematische Schnittansicht einer Anwendung einer Verbindung eines als Automobil-Glasscheibe vorliegenden Bauelementes mit einem Bauteil mit Dichtlippe entsprechend Fig. 1, wobei die Glasscheibe mit einem Einbaukleber an einem eine Automobil-Karosserie andeutenden Karosserieflansch befestigt ist,
- Fig. 6: eine schematische Seitenansicht einer weiteren Ausführungsmöglichkeit eines Verbindungsbereichs zwischen einem Bauteil und einem Bauelement im Schnitt,
- Fig. 7: eine weitere Seitenansicht der Ausführungsmöglichkeit eines Verbindungsbereichs gemäß Fig. 6.

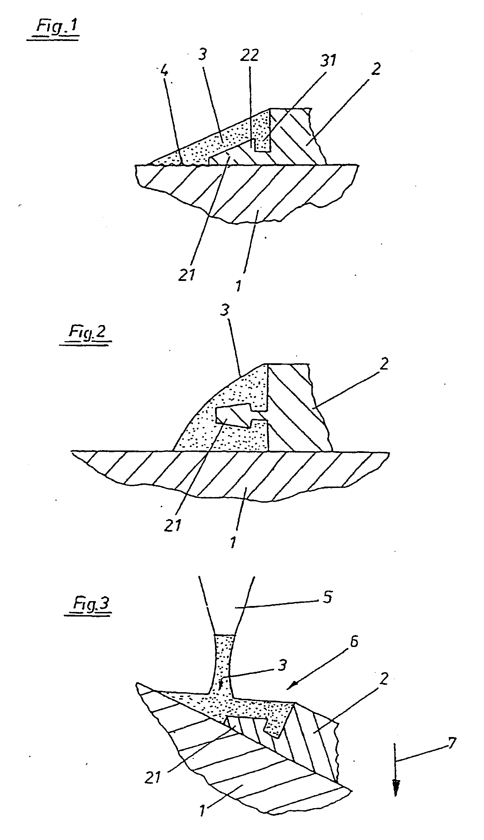

In Fig. 1 ist eine schematische Seitenansicht eines Verbindungsbereichs eines Bauteils 2 mit einem Bauelement 1 im Schnitt dargestellt.

Das Bauteil 2 weist ein Halteorgan 21 auf, das hier als vorstehende Leiste ausgebildet ist. Auf das Bauelement 1 ist aushärtende Vergußmasse gesetzt, aus der wenigstens ein Zwischenhalter 3 ausgeformt ist, der mit dem Halteorgan 21 des Bauteils 2 in haltende Wirkverbindung bringbar ist. Bei diesem Ausführungsbeispiel ist das Halteorgan 21 von der flüssigen, aushärtenden Vergußmasse zunächst umgossen worden (Fig. 3) und ist das Halteorgan 21, nach Aushärten der Vergußmasse, im daraus geformten Zwischenhalter 3 aufgenommen. Das Halteorgan 21 ist als Rastleiste ausgebildet und bildet eine Fortsetzung des Abschnittes des Bauteils 2, der direkt am Bauelement 1 flächig anliegt. Zur Herstellung der haltenden Wirkverbindung zwischen Bauelement 1 und Bauteil 2 ist dieses Halteorgan 21 von dem Zwischenhalter 3 nur einseitig umgeben. Die haltende Wirkverbindung wird dadurch hergestellt, daß das Halteorgan 21 auf seiner dem Bauelement 1 abgekehrten Seite einen eine Hinterschneidung bildenden Vorsprung 22 aufweist, dessen eine Kante von einem abgewinkelten Abschnitt 31 des Zwischenhalters 3 hintergriffen ist.

In Fig. 2 ist eine davon abweichende Ausführungsmöglichkeit eines Verbindungsbereiches dargestellt. Auch hier ist das Halteorgan 21 als durchgängige vom Bauteil 2 vorstehende Rastleiste ausgebildet, jedoch liegt dieses Halteorgan 21 nicht direkt an dem Bauelement 1 an. Das Halteorgan 21 in Fig. 2 ist von der Vergußmasse des Zwischenhalters 3 allseitig umgeben, wodurch gleichfalls eine haltende Wirkverbindung herstellbar ist.

Fig. 3 zeigt wieder den Verbindungsbereich gemäß Fig. 1, und zwar während der Herstellung des Zwischenhalters 3. Der Zwischenhalter 3 wird durch Gießen hergestellt. Dazu wird die flüssige Vergußmasse aus einer Düse 5 ausgestoßen und in einen Aufnahmeraum 6 eingegossen. Der Aufnahmeraum 6 ist im wesentlichen als Rille ausgebildet, er ist dabei vollständig durch die diese Rille ausbildenden Flächen des Bauelementes 1 und des Bauteils 2 unter Einschluß seines Halteorgans 21 ausgebildet. Der Aufnahmeraum 6 wird mit der flüssigen Vergußmasse vollständig gefüllt, wie es in Fig. 3 dargestellt ist. Mit der Vergußmasse wird dabei der Aufnahmeraum 6 so ausgefüllt, daß schließlich der Zwischenhalter 3 formmäßig ausgebildet ist. Anschließend wird die Vergußmasse ausgehärtet. Zur optimalen Füllung des Aufnahmeraumes 6 kann das Bauelement 1 und mit ihm das Bauteil 2 um eine lotrecht aus der Zeichnungsebene austretende Kippachse gekippt werden, wie mit dem Pfeil 7 in Fig. 3 dargestellt. Durch dieses Kippen ist der Aufnahmeraum 6 so im Verhältnis zur Düse 5 angeordnet, daß der Aufnahmeraum 6 vollständig mit der Vergußmasse gefüllt werden kann, ohne daß die Vergußmasse über die Ränder des Aufnahmeraumes 6 insbesondere im Bereich des Bauteils 2 überläuft. Neben dem Bauelement 1 und dem Bauteil 2 werden weitere vorgefertigte Formelemente zum Ausbilden des Zwischenhalters 3 vorteilhaft nicht benötigt.

In Fig. 4 ist eine entsprechende Befüllung des Hohlraumes 6 durch eine extrudierte Vergußmasse dargestellt. Hier ist jedoch das Bauelement 1 nicht um eine Achse gekippt, es ist waagerecht ausgerichtet, da die Vergußmasse nicht flüssig, sondern pastös ist. Im Gegensatz zur Darstellung in Fig. 3 wird hier jedoch ein Extrudierwerkzeug verwendet, nämlich eine Breitschlitzdüse 8. Die Breitschlitzdüse 8 ist so ausgebildet, daß sie gerade die Hypothenuse des etwa im Schnitt dreieckförmig ausgebildeten Aufnahmeraumes 6 überstreicht und somit während einer Bewegung parallel zur Längserstreckung des Aufnahmeraumes 6 diesen mit der extrudierten Vergußmasse füllt. Auch hier härtet die aufgebrachte Vergußmasse anschließend zu dem Zwischenhalter 3 aus.

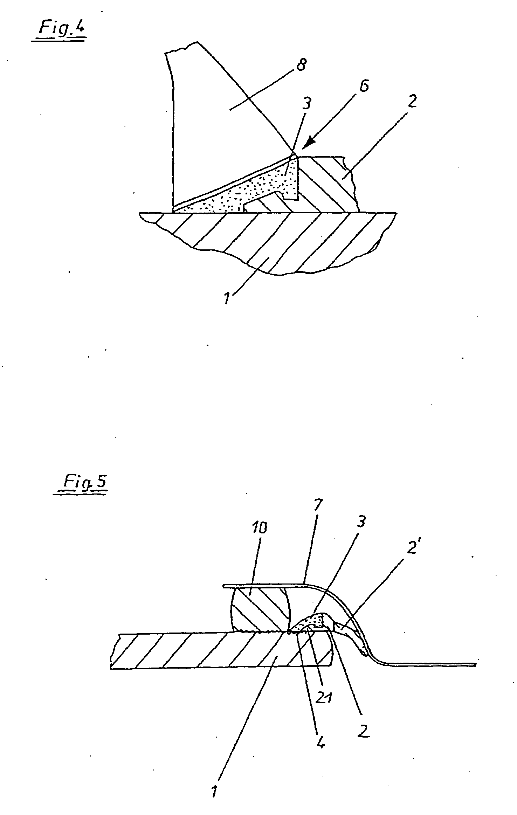

Fig. 5 zeigt eine schematische Schnittansicht einer Anwendung bei einer Verbindung eines als Automobil-Glasscheibe vorliegenden Bauelements 1 mit einem Bauteil 2 mit Dichtlippe 2', wobei das als Glasscheibe vorliegende Bauelement 1 mit einem Einbaukleber 10 an einem Karosserieflansch 7 befestigt ist. Das Bauteil 2 mit dem Halteorgan 21 sind aus einem harten Werkstoff gefertigt, beispielsweise aus EPDM. Die Dichtlippe 21 ist dagegen aus einem weicheren Werkstoff gefertigt, wie Moosgummi. Der härtere Werkstoff von Bauteil 2 und Halteorgan 21 dient dem Ausbilden einer mechanisch festen Verbindung mit dem Zwischenhalter 3, während sich die weiche Dichtlippe 2' eng an den Karosserieflansch 7 anlegen kann.

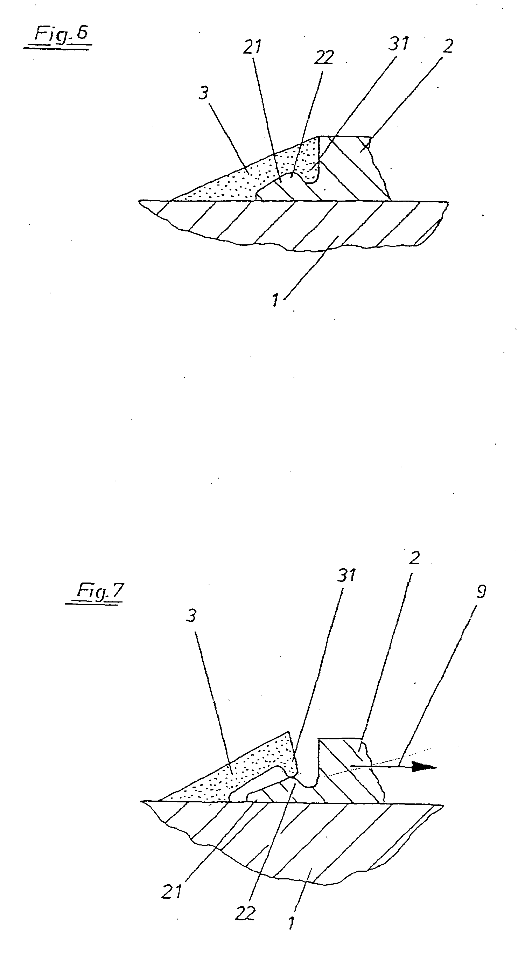

Die Ausführungsmöglichkeit des Verbindungsbereiches in den Fig. 6 und 7 entspricht im wesentlichen der Ausführungsmöglichkeit in Fig. 1. Hier weist jedoch das Halteorgan 21 des Bauteils 2 einen Vorsprung 22 mit abgerundeter Kante auf. Auch der Abschnitt 31 des Zwischenhalters 3, der den Vorsprung 22 hintergreift, ist abgerundet. Durch diese Abrundungen ist ermöglicht, daß das Bauteil 2 durch Herausziehen aus dem Zwischenhalter 3 von dem Bauelement 1 leicht wieder gelöst werden kann. Das Bauteil 2 ist somit auswechselbar, beispielsweise bei einer Ausbildung als Dichtungsprofil in dem Fall, wenn das Dichtungsprofil nach längerem Gebrauch abgenutzt ist. Das Abziehen des Bauteils 2 aus dem Zwischenhalter 3 ist in Fig. 7 durch den Pfeil 9 verdeutlicht. Der Pfeil 9 symbolisiert eine aufzuwendende Kraft, die bewirkt, daß das Bauteil 2 aus dem Zwischenhalter 3 herausgezogen wird. Dabei wird der Abschnitt 31 des Zwischenhalters über den Vorsprung 22 des Halteorgans geführt, wie in Fig. 7 dargestellt. Der Zwischenhalter 3 federt dabei um die Höhe des Vorsprunges 22 auf. Der Zwischenhalter 3 ist dazu aus einer Vergußmasse hergestellt, die zu einem elastischen Material aushärtet.

## Patentansprüche

1. Verfahren zur Herstellung einer Verbindung eines wenigstens ein Halteorgan (21) aufweisenden Dichtungs-Bauteils (2) mit einem Bauelement (1), wobei auf einer im Verbindungsbereich befindlichen Fläche des Bauelementes (1) mittels aushärtender Vergußmasse wenigstens ein Zwischenhalter (3) ausgebildet wird, der mit mindestens einem Halteorgan (21) des Dichtungs-Bauteils (2) in haltende Wirkverbindung bringbar ist, wobei für eine haltende Wirkverbindung zwischen dem Bauteil (2) und dem Zwischenhalter (3) Formschluß bewirkende, korrespondierende Gestaltungen verwendet werden,
**dadurch gekennzeichnet,**
**daß** die Vergußmasse an der im Verbindungsbereich befindlichen Fläche des Bauelementes (1) anhaftet und daß der Zwischenhalter (3) aus einer Vergußmasse gegossen bzw. extrudiert wird, wobei das Bauteil (2) und das Bauelement (1) einen Aufnahmeraum (6) für die gegossene bzw. extrudierte Vergußmasse während des Ausbildens des Zwischenhalters (3) vorzugsweise vollständig ausbilden.

2. Verfahren nach Anspruch 1, **dadurch gekennzeichnet, daß** das Bauteil (2) an das Bauelement (1) in der vorbestimmten Position gesetzt wird und bei der Ausbildung des Zwischenhalters (3) aus Vergußmasse an einer Formgebung der Vergußmasse beteiligt wird.

3. Verfahren nach Anspruch 2, **dadurch gekennzeichnet, daß** die an der Ausbildung des zwischenhalters (3) aus Vergußmasse beteiligten Flächen des Bauteils (2) bei auftretender Adhäsionsneigung der für Bauteil (2) und Vergußmasse verwendeten Werkstoffe vor Anlage der Vergußmasse mit einem Trennmittel beschichtet werden.

4. Verfahren nach einem der Ansprüche 1 bis 3, **dadurch gekennzeichnet, daß** als Aufnahmeraum (6) durch das Bauteil (2) und das Bauelement (1) eine Rille, eine Vertiefung oder dergleichen Hohlkammer gebildet werden.

5. Verfahren nach einem der Ansprüche 1 bis 4, **dadurch gekennzeichnet, daß** für die Vergußmasse für den Zwischenhalter (3) ein nach der Aushärtung hinsichtlich seiner Härte und Elastizität zu den entsprechenden Eigenschaften des jeweiligen Bauteils (2) bzw. Halteorgans (21) konträrer Werkstoff verwendet wird.

6. Verfahren nach einem der Ansprüche 1 bis 5, **dadurch gekennzeichnet, daß** das Bauteil (2) und sein Halteorgan (21) gemeinsam in wenigstens einem Arbeitsgang gefertigt werden und danach über den Zwischenhalter (3) mit dem Bauelement (1) verbunden werden.

7. Verfahren nach Anspruch 6, **dadurch gekennzeichnet, daß** als Material für das Bauteil (2) Moosgummi verwendet wird und daß als Material für sein Halteorgan (21) ein härterer Werkstoff, z. B. EPDM, verwendet wird.

## Claims

1. A process for producing a connection of a sealing component (2) having at least one retainer (21) to a unit (1), where a casting composition which has curing properties is used to form at least one intermediate holder (3) on a surface of the unit (1) in the region of the connection, and the intermediate holder (3) can be brought into operative holding connection with at least one retainer (21) of the sealing component (2), in which corresponding shapes which bring about interlocking are used to give an operative holding connection between the component (2) and the intermediate holder (3),
**characterized in that**
the casting composition adheres to the surface of the unit (1) in the region of the connection, and that the intermediate holder (3) is cast or extruded from a casting composition, in which the component (2) and the unit (1) preferably entirely form a receiving space (6) for the cast or extruded casting composition during the formation of the intermediate holder (3).

2. The process according to Claim 1, **characterized in that** the component (2) is placed onto the unit (1) in the prescribed position, and participates in shaping of the casting composition when the intermediate holder (3) is shaped from the casting composition.

3. The process according to Claim 2, **characterized in that** prior to application of the casting composition, a release agent is used to coat those component (2) surfaces participating in the formation of the intermediate holder (3) from a casting composition in the event that any tendency arises toward adhesion of the materials used for component (2) and casting composition.

4. The process according to any of Claims 1 to 3,
**characterized in that** the receiving space (6) takes the form of a groove, a depression or a similar cavity, formed by the component (2) and the unit (1).

5. The process according to any of Claims 1 to 4,
**characterized in that** the casting composition used for the intermediate holder (3) is a material whose hardness and flexibility after curing are greatly different from the corresponding properties of the respective component (2) and, respectively, retainer (21).

6. The process according to any of Claims 1 to 5,
**characterized in that** the component (2) and its retainer (21) are manufactured together in at least one operation and then connected by way of the intermediate holder (3) to the unit (1).

7. The process according to Claim 6, **characterized in that** the material for the component (2) comprises sponge rubber, and the material used for its retainer (21) comprises a harder material, e.g. EPDM.

## Revendications

1. Procédé de réalisation d'une liaison d'un composant d'étanchéité (2) comportant au moins un organe de maintien (21), avec un élément de construction (1), dans lequel, sur une surface de l'élément de construction (1) se trouvant dans la zone de liaison, on réalise, au moyen d'une pâte de scellement durcissante, au moins un support intermédiaire (3) qui peut être amené en liaison active de maintien avec au moins un organe de maintien (21) du composant d'étanchéité (2), des formes correspondantes, provoquant une liaison par complémentarité des formes, étant utilisées pour une liaison active de maintien entre le composant (2) et le support intermédiaire (3), **caractérisé en ce que** la pâte de scellement adhère à la surface de l'élément de construction (1) se trouvant dans la zone de liaison et **en ce que** le support intermédiaire (3) est coulé ou extrudé dans une pâte de scellement, le composant (2) et l'élément de construction (1) réalisant, de préférence entièrement, un volume de réception (6) pour la pâte de scellement coulée ou extrudée pendant la formation du support intermédiaire (3).

2. Procédé selon la revendication 1, **caractérisé en ce que** le composant (2) est placé sur l'élément de construction (1) dans la position prédéterminée et participe au formage de la pâte de scellement lors de la réalisation du support intermédiaire (3) en pâte de scellement.

3. Procédé selon la revendication 2, **caractérisé en ce que** les surfaces du composant (2), qui participent à la réalisation du support intermédiaire (3) en pâte de scellement, sont recouvertes d'un agent de démoulage au moment de l'apparition de la tendance à l'adhérence des matériaux utilisés pour le composant (2) et la pâte de scellement, avant application de la pâte de scellement.

4. Procédé selon l'une des revendications 1 à 3, **caractérisé en ce que** le composant (2) et l'élément de construction (1) forment, en tant que volume de réception (6), une gorge, un renfoncement ou une chambre creuse similaire.

5. Procédé selon l'une des revendications 1 à 4, **caractérisé en ce que**, pour la pâte de scellement pour le support intermédiaire (3), on utilise un matériau qui, après durcissement, est contraire dans sa dureté et son élasticité aux propriétés correspondantes du composant (2) ou de l'organe de maintien (21).

6. Procédé selon l'une des revendications 1 à 5, **caractérisé en ce que** le composant (2) et son organe de maintien (21) sont réalisés ensemble en au moins une passe, puis sont reliés, par le support intermédiaire (3), à l'élément de construction (1).

7. Dispositif selon la revendication 6, **caractérisé en ce qu'**on utilise comme matériau pour le composant (2) du caoutchouc mousse et **en ce qu'**on utilise comme matériau, pour son organe de maintien (21), un matériau plus dur, par exemple de l'EPDM.
